(19) Europäisches Patentamt
European Patent Office
Office européen des brevets

(11) **EP 3 760 686 B1**

(12) **EUROPÄISCHE PATENTSCHRIFT**

(45) Veröffentlichungstag und Bekanntmachung des Hinweises auf die Patenterteilung:
**07.09.2022 Patentblatt 2022/36**

(21) Anmeldenummer: **20183356.3**

(22) Anmeldetag: **01.07.2020**

(51) Internationale Patentklassifikation (IPC):
**C09J 115/00** (2006.01)   **C09J 163/00** (2006.01)
**C09J 7/35** (2018.01)   **C09J 7/20** (2018.01)
**C08G 59/42** (2006.01)   **C08G 59/44** (2006.01)
**C08G 59/50** (2006.01)

(52) Gemeinsame Patentklassifikation (CPC):
(C-Sets verfügbar)
**C09J 7/35; B29B 7/007; C08G 59/066;**
**C08G 59/4223; C08G 59/44; C08G 59/502;**
**C08G 59/58; C09J 163/00;** C09J 2203/354;
C09J 2301/408; C09J 2409/00; C09J 2463/00;
C09J 2477/00                                    (Forts.)

(54) **THERMISCH HÄRTENDER KLEBSTOFF UND DARAUS HERGESTELLTES KLEBEBAND**

THERMOSETTING ADHESIVE AND ADHESIVE TAPE MADE FROM SAME

ADHÉSIF À DURCISSEMENT THERMIQUE ET BANDE ADHÉSIVE FABRIQUÉE À PARTIR DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2019 DE 102019209754**

(43) Veröffentlichungstag der Anmeldung:
**06.01.2021 Patentblatt 2021/01**

(73) Patentinhaber: **tesa SE**
**22848 Norderstedt (DE)**

(72) Erfinder:
• **SCHÜMANN, Uwe**
**25421 Pinneberg (DE)**
• **BUGGY, Nicholas**
**Attwood, Victoria 3049 (AU)**
• **DIETZE, Sebastian**
**24568 Kaltenkirchen (DE)**
• **ELSENBACH, Kim**
**22941 Bargteheide (DE)**

(74) Vertreter: **tesa SE**
**Hugo-Kirchberg-Straße 1**
**22848 Norderstedt (DE)**

(56) Entgegenhaltungen:
**WO-A1-2008/000830     US-A- 5 160 628**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 760 686 B1

(52) Gemeinsame Patentklassifikation (CPC): (Forts.)

C-Sets
C09J 2409/00, C09J 2477/00

**Beschreibung**

Die vorliegende Erfindung betrifft einen vorzugsweise haftklebrigen, schmelzbaren, bei Raumtemperatur lagerstabilen, ab 110 °C thermisch härtbaren, nach der Härtung zähelastischen, hochfesten 1K-Klebstoff, ein Verfahren zu dessen Herstellung, ein Klebeband enthaltend diesen Klebstoff sowie ein Verfahren zur Herstellung des Klebebandes. Die Erfindung kann überall dort verwendet werden, wo Prozesstemperaturen zwischen 110 °C und 230 °C zur Verfügung stehen. Die Erfindung kann somit als Klebeband oder Dichtungsband oder als Teil eines Klebe- oder Dichtungsbandes in der Automobilindustrie im Rohbau zur Applikation auf geölten Blechen oder im Lackierprozess zur Applikation auf lackierten Blechen, zum Beispiel auf KTL-Blechen verwendet werden. Insbesondere kann die Erfindung auch in Bereichen, in denen Prozesstemperaturen von 110 °C nicht überschritten werden können oder dürfen, genutzt werden. Dies kann der Fall sein, wenn es um die Verklebung temperaturempfindlicher Bauteile, wie zum Beispiel bestimmter Kunststoffe geht.

Thermisch härtende Klebstoffe und daraus herstellbare Klebebänder sind hinlänglich bekannt. So beschreibt beispielsweise WO2018059931A1 einen thermisch vulkanisierbaren, schmelzbaren, vorzugsweise haftklebrigen Klebstoff und ein daraus hergestelltes Klebeband. Für einige Verwendungen nachteilig daran ist, dass die Härtung erst ab ca. 130 °C einsetzt.

DE 10 2013 217 880 A1 beschreibt latentreaktive Klebeprodukte mit Anspringtemperaturen ab 40 °C, basierend auf einer Schicht eines latentreaktiven Klebefilms, der eine thermoplastische Komponente mit funktionellen Gruppen, die mit Isocyanat reagieren können, und eine Isocyanat-haltige Komponente enthält, die partikulär in die thermoplastische Komponente eindispergiert vorliegt und blockiert, mikroverkapselt oder im Bereich der Partikeloberfläche im Wesentlichen desaktiviert ist. Für einige Verwendungen nachteilig ist hier, dass diese Klebeprodukte nicht haftklebrig sind.

Zur thermischen Härtung eines Einkomponenten-Klebstoffs (im weiteren auch als 1K-Epoxidklebstoff bezeichnet) bei relativ moderaten Temperaturen schlägt US 4,459,398 die Verwendung des Umsetzungsproduktes von Diethylentriamin mit Phthalsäureanhydrid, erhältlich von Ciba Geigy unter dem Handelsnamen HY 939, in Kombination mit Dicyandiamid und dem Komplex eines Imidazols mit einem Metallsalz vor. Die Lagerstabilität wird mit mehreren Monaten und die Härtungszeit wird mit weniger als 4 Minuten bei 130 °C bis 150°C angegeben. Die zu härtenden Epoxide sind gemäß Anspruch 1 dieser Schrift neben einem flexibilisierenden Epoxid stets Bisphenol-A-diglycidylether.

Auch EP 0289632 A1 schlägt die Verwendung des Umsetzungsproduktes von Diethylentriamin mit Phthalsäureanhydrid in Kombination mit Dicyandiamid zur Härtung von Bisphenol A- diglycidylether-Harzen vor, wobei die Härtungung hier induktiv erfolgt. Es wird eine Lagerstabilität von mindestens zwei Wochen bei Temperaturen von bis zu 41 °C angegeben. Bei Temperaturen von bis zu 150°C werden die Formulierungen in dieser Schrift mit nicht-reaktiv angegeben. Epoxide sind in den Beispielen dieser Schrift hauptanteilig stets Bisphenol-A-diglycidylether.

EP 1876194 A1 schlägt hitzehärtende Zusammensetzungen vor, welche mindestens ein Epoxidharz A mit durchschnittlich mehr als einer Epoxidgruppe pro Molekül, mindestens einen Schlagzähigkeitsmodifikator B, mindestens einen Rissförderer C sowie mindestens einen Härter D für Epoxidharze enthalten, wobei in einem Beispiel unter dem Handelsnamen Aradur HT 939 EN das Umsetzungsprodukt von Diethylentriamin mit Phthalsäureanhydrid (CAS-Nr.: 68003-28-1) als Rissförderer C in Kombination mit unter anderem einem Flüssigkautschuk, einem Harnstoffderivat und einem blockierten Polyurethan als Schlagzähigkeitsmodifikator sowie einem Bisphenol-A-diglycidylether als Epoxidharz und Dicyandiamid als Härter verwendet wird.

Zur Erzielung von Zähelastizität oder Zähigkeit ist die Verwendung von funktionalisierten Acrylnitril/Butadien-Copolymeren oder Nitrilkautschuken aus zahlreichen Schriften bekannt, zum Beispiel aus EP 381625 B1, EP 245018 B1, DE 4001417 A1, EP 1527147 B1, EP 1578838 B1, EP 1 819 793 B1, EP 2084199 B1, EP 2084203 B1, EP 2084203 B1, EP 2161274 B1, EP 2182025 B1, EP 2730594 A1, EP 2917254 B1, EP 2986685 B1, US 4661539, US 10150897 B2, US 20170081571 A1, WO 2004067664, WO2014072426 A1, WO 2014172128 A, um nur eine kleine Auswahl zu nennen. Die Funktionalisierung ist häufig eine Carboxylgruppe, aber auch Hydroxyl-, Amino-, Acrylat- oder Epoxidfunktionen sind üblich. Klebstoffformulierungen, die bei Raumtemperatur lagerstabil sind und bereits ab 110 °C schnell aushärten, werden in diesen Schriften nicht vorgestellt.

In der bereits zitierten Schrift EP 1876194 A1 werden neben dem Umsetzungsprodukt von Diethylentriamin mit Phthalsäureanhydrid, das dort als Rissförderer Verwendung findet, auch funktionalisierte Acrylnitril/Butadien-Copolymere als bekannte Schlagzähigkeitsmodifikatoren beschrieben. Eine Rezeptur, die beide Stoffe gleichzeitig enthält, wird nicht vorgestellt. Kommerziell verfügbare funktionalisierte Acrylnitril/Butadien-Copolymere sind beispielsweise die Hypro®-Typen von der Firma CVC/ Emerald Performance Materials (früher Hycar® von der Firma BF Goodrich), oder das Struktol®-Polydis-Sortiment von der Firma Schill+Seilacher.

Aufgabe der Erfindung ist es, einen - vorzugsweise haftklebrigen - Klebstoff sowie ein Klebeband mit einem solchen Klebstoff bereitzustellen, der bzw. das thermisch innerhalb eines Temperaturbereichs von 110 °C bis 230 °C härtbar ist, so dass der Klebstoff bzw. das Klebeband in der Automobilindustrie sowohl im Rohbau auf geölten Blechen als auch in der Lackierstraße auf KTL-beschichteten oder anderweitig lackierten Blechen zum Kleben und/ oder Dichten verwendet werden können, zum Beispiel zur Bördelfalzklebung, zur Bördelfalzabdichtung, zur Nahtabdichtung, zur Unterfütterungsklebung, zum Lochverschluss und vieles mehr. Insbesondere soll die Erfindung aber auch in Bereichen, in denen Prozesstemperaturen von 110°C nicht überschritten werden können oder dürfen, genutzt werden können, zum Beispiel zur Verklebung temperaturempfindlicher Substrate, wie etwa bestimmter Kunststoffe. Die mit dem Klebstoff erzielbaren Zugscherfestigkeiten sollen bis in den Bereich von circa 20,0 N/mm² hineinreichen. Der Klebstoff soll innerhalb eines Temperaturbereichs von 40 °C bis 60 °C in einem Compoundier- und Extrusionsprozess hergestellt werden können. Das Basiselastomer dieses Klebstoffes muss somit innerhalb dieses letztgenannten Temperaturbereichs als Schmelze vorliegen. Während der Verarbeitung als Schmelze oder während der nachfolgenden Lagerung bei Temperaturen bis 60 °C darf es nicht zum Anspringen der Aushärtereaktion oder zu einer anderweitigen Vernetzungsreaktion kommen. Im Temperaturbereich von Raumtemperatur (20 °C-25 °C, idealerweise 23 °C) bis 30 °C muss der Klebstoff genügend fest beziehungsweise hochviskos sein, so dass er als auf einen Trennliner oder als auf ein Trägermaterial beschichteter Film zu einer Rolle aufgewickelt werden kann, ohne dass er an der Seite herausfließt beziehungsweise durch den Wickeldruck herausgequetscht wird.

Gelöst wird diese Aufgabe durch einen - insbesondere thermisch härtbaren, schmelzbaren, vorzugsweise haftklebrigen - Klebstoff, umfassend ein epoxidfunktionalisiertes Acrylnitril/Butadien-Copolymer mit durchschnittlich mehr als 1,5 Epoxidgruppen pro Molekül und das gemahlene Reaktionsprodukt aus Phthalsäureanhydrid und Diethylentriamin.

Die vorliegende Erfindung betrifft insbesondere einen thermisch härtbaren Klebstoff, der bei Raumtemperatur eine feste oder zumindest sehr hochviskose Konsistenz hat und vorzugsweise haftklebrig ist, in einem Temperaturbereich zwischen ungefähr 40 °C und 60 °C als Schmelze in einem Compoundier- und Extrusionsprozess verarbeitet werden kann und thermisch in einem Temperaturbereich zwischen 110 °C und 230 °C aushärtet. Die so erzielte Aushärtung beinhaltet eine chemische Vernetzung, so dss der Klebstoff nach der Aushärtung nicht mehr schmelzbar ist.

Unter einem epoxidfunktionalisierten Acrylnitril/Butadien-Copolymer mit durchschnittlich mehr als 1,5 Epoxidgruppen pro Molekül wird in dieser Schrift ein Copolymer aus Acrylnitril und Butadien verstanden, an das die entsprechende Anzahl an Epoxidgruppen chemisch angeknüpft ist. Vorzugsweise sind zwei Epoxidgruppen pro Molekül chemisch angeknüpft. Die chemische Anknüpfung erfolgt im Allgemeinen in der Weise, dass von einem Carboxylfunktionalisiertem, meist Carboxyl-terminierten Copolymer aus Acrylnitril und Butadien (CAS-Nummer: 68891-46-3) ausgegangen wird, das entweder mit einem Diepoxid, zum Beispiel mit Bisphenol-A-diglycidylether (DGEBA) oder mit Bisphenol-F-diglycidylether (DGEBF) oder mit einem Bisphenol-A-Epichlorhydrinharz mit durchschnittlicher Molmasse ≤700 g/mol (CAS-Nummer: 25068-38-6) oder mit einem Bisphenol-F-Epichlorhydrinharz (CAS-Nummer: 9003-36-5) oder mit Epichlorhydrin umgesetzt wird. Carboxyl-terminierte Copolymere aus Acrylnitril und Butadien sind unter dem Handelsnamen Hypro® und der Endung CTBN von der Firma CVC/ Emerald Performance Materials kommerziell erhältlich. Die daraus hergestellten epoxidfunktionalisierten Acrylnitril/Butadien-Copolymere sind von der gleichen Firma ebenfalls unter dem Handelsnamen Hypro®-erhältlich und tragen die Endung ETBN. Sie sind weiterhin von der Firma Schill+Seilacher unter dem Handelsnamen Struktol®-Polydis erhältlich. Dort sind unter dem gleichen Handelsnamen auch die besonders vorteilhaften, mit Bisphenol A und Bisphenol F kettenkettenverlängerten Typen erhältlich sowie die ebenfalls verwendbaren, epoxidfunktionalisierten, vorvernetzten Nitrilkautschuke.

Das Reaktionsprodukt aus Phthalsäureanhydrid und Diethylentriamin hat die CAS-Nummer: 68003-28-1. Es ist in gemahlenener Form unter dem Handelsnamen ARADUR® 9506 von der Firma Huntsman erhältlich. Der freie Diethylentriamingehalt liegt vorteilhaft und gemäß der Spezifikation von ARADUR® 9506 zwischen einschließlich 1,0 und 5,0 Gewichtsprozent. Die Korngröße ist vorteilhaft (und auch gemäß der Spezifikation von ARADUR® 9506) zu mindestens 95 Gewichtsprozent im Durchmesser kleiner oder gleich 70 μm (ermittelt mittels statischer Laser-Lichtstreuung (Laser diffraction technique, ISO 13320:2009; da die Ausschlussgrenze bei 70 μm liegt, ist eine Spezifizierung nach Mie- oder Fraunhofer-Therie nicht erforderlich).

Das epoxidfunktionalisierte Acrylnitril/Butadien-Copolymer mit durchschnittlich mehr als 1,5 Epoxidgruppen pro Molekül und das gemahlene Reaktionsprodukt aus Phthalsäureanhydrid und Diethylentriamin liegen in dem erfindungsgemäßen Klebstoff vorteilhaft in einem definierten Verhältnis vor. Dieses definierte Verhältnis ist so gewählt, dass die Anzahl der NH-Bindungen des gemahlenen Reaktionsprodukts aus Phthalsäureanhydrid und Diethylentriamin zur Gesamtanzahl der Epoxidgruppen zwischen einschließlich 0,1 und 1,5, bevorzugt zwischen einschließlich 0,3 und 1,2, besonders bevorzugt zwischen 0,5 und 0,9 beträgt, wobei zur Berechnung dieser Verhältnisse für das Reaktionsprodukt aus Phthalsäureanhydrid und Diethylentriamin von einem theoretischen Äquivalentgewicht von 77,7 g pro Mol NH-Bindungen ausgegangen wird.

Ein schmelzbarer Klebstoff im Sinne dieser Schrift hat eine mit einem Rheometer im Oszillationsversuch bei einer sinusförmig oszillierenden Scherbeanspruchung in einer Platte-Platte-Anordnung, einer Temperatur von 23 °C und einer Oszillationsfrequenz von 10,0 rad/s gemessene komplexe Viskosität von mindestens 1.000 Pas, vorzugsweise mindestens 2.000 Pas, idealerweise mindestens 3.000 Pas. Bei Temperaturen im Bereich zwischen 40 °C und 60 °C und einer Oszillationsfrequenz von 10,0 rad/s verringert sich die komplexe Viskosität bis auf weniger als 500 Pas, vorzugsweise bis auf weniger als 200 Pas, idealerweise bis auf weniger als 100 Pas. Die Oszillationsfrequenz entspricht der Winkelfrequenz.

Die komplexe Viskosität $\eta^*$ ist folgendermaßen definiert: $\eta^* = G^* / \omega$
($G^*$ = komplexer Schubmodul, $\omega$ = Winkelfrequenz).
Die weiteren Definitionen lauten:

$$G^* = \sqrt{(G')^2 + (G'')^2}$$

($G''$ = Viskositätsmodul (Verlustmodul), $G'$ = Elastizitätsmodul (Speichermodul)).
$G'' = \tau/\gamma \cdot \sin(\delta)$ ($\tau$ = Schubspannung, y = Deformation, $\delta$ = Phasenwinkel = Phasenverschiebung zwischen Schubspannungs- und Deformationsvektor).
$G' = \tau/\gamma \cdot \cos(\delta)$ ($\tau$ = Schubspannung, y = Deformation, $\delta$ = Phasenwinkel = Phasenverschiebung zwischen Schubspannungs- und Deformationsvektor).
$\omega = 2\pi \cdot f$ (f = Frequenz).

Haftklebrigkeit ist die Eigenschaft eines Stoffes, bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Häufig können sie nach Gebrauch im Wesentlichen rückstandsfrei vom Haftgrund wieder abgelöst werden. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs.
Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.
Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.
Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.
Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.
Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul ($G'$) und Verlustmodul ($G''$) herangezogen werden. $G'$ ist ein Maß für den elastischen Anteil, $G''$ ein Maß für den viskosen Anteil eines Stoffes. Beide Größen sind abhängig von der Deformationsfrequenz und der Temperatur.
Die Größen können mit Hilfe eines Rheometers ermittelt werden. Das zu untersuchende Material wird dabei zum Beispiel in Form einer planparallelen Schicht in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.
Der Speichermodul $G'$ ist wie folgt definiert: $G' = (\tau/\gamma) * \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls $G''$ lautet: $G'' = (\tau/\gamma) * \sin(\delta)$ ($\tau$ = Schubspannung, $\gamma$ = Deformation, $\delta$ = Phasenwinkel = Phasenverschiebung zwischen Schubspannungs- und Deformationsvektor).
Ein Stoff und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von $10°$ bis $10^1$ rad/sec, $G'$ zumindest zum Teil im Bereich von $10^3$ bis $10^7$ Pa liegt und wenn $G''$ ebenfalls zumindest zum Teil in diesem Bereich liegt. Zum Teil heißt, dass zumindest ein Abschnitt der $G'$-Kurve innerhalb des Fensters liegt, das durch den Deformationsfrequenzbereich von einschließlich $10°$ bis einschließlich $10^1$ rad/sec (Abszisse) sowie den Bereich der $G'$-Werte von einschließlich $10^3$ bis einschließlich $10^7$ Pa (Ordinate) aufgespannt wird, und wenn zumindest ein Abschnitt der G"-Kurve ebenfalls innerhalb dieses Fensters liegt.

Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren. Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise in "Satas, Handbook of Pressure Sensitive Adhesive Technology, Third Edition, (1999), Seiten 153 bis 203" beschrieben.

Als Füllstoffe, die optional ebenfalls enthalten sein können, können sowohl verstärkende, wie zum Beispiel Ruß, als auch nicht verstärkende, wie zum Beispiel Carbonate, insbesondere Kreide oder Sulfate wie zum Bespiel Bariumsulfat, eingesetzt werden. Weitere Beispiele für in Frage kommende Füllstoffe sind Silikate, wie etwa Talkum, Kaolin, calciniertes oder teilcalciniertes Kaolin, Wollastonite oder Glimmer, Hydroxide oder Oxide, wie etwa Quarzmehl, Aluminiumhydroxid, Zinkoxid oder Calciumoxid. Auch Mikrokugeln kommen als Füllstoffe in Frage. Mikrokugeln können Mikrovollglaskugeln, Mikrohohlglaskugeln und/oder Mikrokunststoffkugeln aller Art sein. Die Mikrokunststoffkugeln können vorexpandiert sein oder unexpandiert vorliegen. Die Partikelgröße im expandierten Zuustand liegt meist im Bereich zwischen 20 und 150 $\mu$m. Auch Mischungen der genannten Stoffe können eingesetzt werden. Die in Frage kommenden Rußarten unterliegen keiner Einschränkung. Zu nennen sind zum Beispiel Gasruß, Furnace-Ruß, Flammruß, Spaltruß, Acetyleneruß, alle Arten von Füllstoffruß, Farbruß sowie Leitfähigkeitsruß.

Als Farbpigmente kommen grundsätzlich alle organischen und anorganischen Arten in Frage.

Optional kann der thermisch härtbare, schmelzbare, vorzugsweise haftklebrige Klebstoff auch Klebrigmacherharze enthalten. Unter der Bezeichnung "Klebrigmacherharz", englisch "Tackifier Resins", versteht der Fachmann einen Stoff auf Harzbasis, der die Klebrigkeit erhöht. Klebrigmacherharze lassen sich einteilen in Naturharze und synthetische Harze.

Typische Naturharze sind auf Kolophonium basierende Harze und ihre Derivate. Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Typische synthetische Harze sind Polyterpenharze, wobei die Rohstoffe hier allerdings natürlichen Quellen entstammen, Kohlenwasserstoffharze und Terpenphenolharze. Es handelt sich sich dabei um Polymere mit niedrigem Molekulargewicht. Das gewichtsgemittelte, mittlere Molekulargewicht beträgt in der Regel kleiner 25.000 g/mol. Poly-terpenharze basieren auf $\alpha$-Pinen und/oder $\beta$-Pinen und/oder $\delta$-Limonen. Diese können hydriert, nicht hydriert oder teilhydriert sein.

Rohstoffe für die meisten Kohlenwasserstoffharze sind Nebenprodukte, die bei der Crackung von Naphtha oder Gasöl anfallen. Kohlenwasserstoffharze können danach klassifiziert werden, ob sie auf in erster Linie aromatischen, aliphatischen oder Dien-Monomeren basieren. Aromatische werden oft als C-9-Harze, aliphatische als C-5-Harze und Dien-Harze als $(C-5)_2$-Harze bezeichnet. Gemischte aromatisch-aliphatische Kohlenwasserstoffharze ((C-5/C-9)-Harze) sind ebenfalls vom Erfindungsgedanken eingeschlossen. Auch Kohlenwasserstoffharze können hydriert, nicht hydriert oder teilhydriert sein.

Vom Erfindungsgedanken eingeschlossen sind weiterhin Monomerharze vom Typ Styrol / $\alpha$-Methylstyrol (CAS-Nr.: 9011-11-4). Terpenphenolharze sind nach DIN 16916-1 1981-06 und ISO/TR 8244:1988 Harze, die durch Säure-katalysierte Addition von Phenolen an Terpene oder Kolophonium hergestellt werden.

Optional kann der thermisch härtbare, schmelzbare, vorzugsweise haftklebrige Klebstoff weiterhin Bitumen enthalten. Bitumen ist ein dunkelfarbiges, halbfestes bis springhartes, hochmolekulares Kohlenwasserstoffgemisch, das bei der Destillation geeigneten Erdöls als Rückstand anfällt und noch chemisch gebundenen Schwefel, Sauerstoff, Stickstoff und einige Spuren von Metallen enthält. Physikalisch gesehen gehört Bitumen zu den thermoplastischen Stoffen, das heißt seine Eigenschaften sind temperaturabhängig. Bei Abkühlung wird es spröde, bei Erwärmung durchläuft es stufenlos alle Zustände von fest über zähflüssig bis dünnflüssig. Man unterscheidet unter anderem folgende Bitumenarten und abgeleitete Produkte: Straßenbaubitumen, insbesondere Weichbitumen, modifiziertes Bitumen, insbesondere polymermodifiziertes Bitumen, Industrie-Bitumen, insbesondere Oxidationsbitumen beziehungsweise Hartbitumen, Flux-Bitumen und Bitumenemulsion.

Erfindungsgemäß bevorzugt ist Straßenbaubitumen. Besonders bevorzugt ist die Sorte 50/70, wobei die Zahlen die minimale und maximale Penetration bei 25 °C in der Einheit mm/10 nach DIN EN 1426 angeben. Vorteilhafte Bitumen-Konzentrationen in dem thermisch vulkanisierbaren, schmelzbaren, vorzugsweise haftklebrigen Klebstoff liegen zwischen einschließlich 1,0 Gew.% und einschließlich 30,0 Gew.%. Besonders vorteilhaft sind Konzentrationen zwischen einschließlich 5,0 Gew.% und einschließlich 20,0 Gew.%. Durch den Zusatz von Bitumen kann die Ölaufnahme verbessert werden, wenn auf geölten Blechen geklebt wird.

Optional kann der thermisch härtbare, schmelzbare, vorzugsweise haftklebrige Klebstoff außerdem Weichmacher enthalten. Weichmacher sind flüssige oder feste, indifferente organische Substanzen mit geringem Dampfdruck, überwiegend solche esterartiger Natur, welche ohne chemische Reaktion, vorzugsweise durch ihr Löse- und Quellvermögen, unter Umständen aber auch ohne ein solches, mit hochpolymeren Stoffen in physikalische Wechselwirkung treten und ein homogenes System mit diesen bilden können. Die Kurzbezeichnungen von Weichmachern sind in der DIN EN ISO 1043-3: 2000-01 geregelt. Die wichtigsten Weichmacher lassen sich in größere Gruppen einteilen, die im Folgenden aufgeführt sind, wobei in Klammern die Kurzzeichen nach DIN EN ISO 1043-3: 2000-01 stehen.

Phthalsäureester, auch kurz Phthalate genannt, umfassen unter anderem Dioctylphthalat (DOP; Di(2-ethylhexyl)phthalat), Diisononylphthalat (DINP), Diisodecylphthalat (DIDP) Phthalsäureester mit überwiegend linearen $C_6$- bis $C_{11}$-Alkoholen, Dibutylphthalat (DBP), Diisobutylphthalat (DIBP), Dicyclohexylphthalat (DCHP), Dimethylphthalat (DMP) und Diethylphthalat (DEP) sowie Mischester aus Benzyl(butyl)- (BBP), Butyl(octyl)-, Butyl(decyl)- und Dipentylphthalat, Bis(2-methoxyethyl)phthalat und Dicaprylphthalat (DCP).

Ein Beispiel für Trimellit(h)säureester mit (überwiegend) linearen $C_6$- bis $C_{11}$-Alkoholen ist Tris(2-ethylhexyl)trimellitat (TOTM).

Acyclische aliphatische Dicarbonsäureester sind zum Beispiel Ester der Adipinsäure wie Bis(2-ethylhexyl)adipat (Dioctyladipat, DOA), Bis(8-methylnonyl)adipat (Diisodecyladipat, DIDA), Dibutyldecandioat (Dibutylsebacat, DBS), Bis(2-ethylhexyl)decandioat (Dioctylsebacat, DOS; Ein Beispiel für einen cyclischen aliphatischen Dicarbonsäureester ist 1,2-Cyclohexandicarbonsäurediisononylester (DINCH).

Beispiele für Polymerweichmacher sind Polyester aus Adipin-, Decandi-, Nonandi- und Phthalsäure mit Diolen wie Butan-1,3-diol, Propan-1,2-diol, Butan-1,4-diol, Hexan-1,6-diol und anderen ($M_r$ ca. 1800-13000 g/mol).

Phosphorsäureester, kurz Phosphate genannt, sind eine weitere Gruppe. Beispielhaft zu nennen wären hier Trikresylphosphat (TCF), Triphenylphosphat (TPP), Diphenylkresylphosphat (DPCF), (2-Ethylhexyl)diphenylphosphat (Diphenyloctylphosphat, DPOF) , Tris(2-ethylhexyl)phosphat (TOF) und Tris(2-butoxyethyl)phosphat.

Butyloleat oder Butylstearat sind Beispiele für Fettsäureester, die eine weitere Gruppe darstellen. Weitere Beispiele für diese Gruppe sind Methyl- und Butylester der acetylierten Ricinolfettsäure und Fettsäureglycolester sowie Triethylenglycol-bis(2-ethylbutyrat).

Citronensäureester sind Beispiele für die Gruppe der Hydroxycarbonsäureester. Weitere Beispiele sind Weinsäureester und Milchsäureester.

Eine weitere Gruppe von Weichmachern sind Epoxyweichmacher, zum Beispiel epoxidierte Fettsäure-Derivate, insbesondere Triacylglycerole und Monoester. Auch einige der zuvor genannten Epoxidharze lassen sich in die Gruppe der Weichmacher einordnen. Weiterhin zu nennen wären noch Polyamidweichmache, zum Beispiel Benzolsulfonamide oder Methylbenzolsulfonamide. Eine weitere Gruppe von Weichmachern sind Alkylsulfonsäureester des Phenols (ASE). Auch Mineralöle sind im Sinne dieser Schrift als Weichmacher zu betrachten. Bevorzugt sind naphthenische Mineralöle. Auch das bereits separat aufgeführte Bitumen ließe sich in die Rubrik der Weichmacher einordnen.

In einer optionalen Ausführungsform enthält der thermisch härtbare, schmelzbare, vorzugsweise haftklebrige Klebstoff weitere Hilfs- und Zusatzstoffe wie zum Beispiel rheologische Additive, Alterungsschutzmittel (Antioxidantien), Lichtschutzmittel oder UV-Absorber. Beispiele für rheologische Additive sind pyrogene, hydrophobierte oder nicht hydrophobierte Kieselsäuren, Schichtsilikate (Bentonite), hochmolekulare Polyamidpulver oder Rizinusölderivat-Pulver. Die genannten rheologischen Additive können auch in die Rubrik der Füllstoffe eingeordnet werden. Zu den geeigneten Antioxidantien zählen zum Beispiel sterisch gehinderte Phenole, Hydrochinon-Derivate, Amine, organische Schwefelverbindungen oder organische Phosphorverbindungen.

Als Lichtschutzmittel finden zum Beispiel die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verbindungen Verwendung.

Die vorliegende Erfindung betrifft darüber hinaus ein Klebeband, das auf einer Seite oder auf beiden Seiten zumindest teilweise mit dem erfindungsgemäßen Klebstoff beschichtet ist. Dabei kann es sich bei dem Klebeband auch um ein Transferklebeband handeln. Ein Klebeband ermöglicht eine besonders einfache und präzise Verklebung und ist daher besonders geeignet.

Der allgemeine Ausdruck "Klebeband" umfasst ein Trägermaterial, welches ein- oder beidseitig jeweils zumindest teilweise mit einem (Haft)klebstoff versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer zu klebenden Anordnung), andere Formkörper, Mehrschichtanordnungen und dergleichen. Dabei sind für verschiedene Anwendungen unterschiedlichste Träger wie zum Beispiel Folien, Gewebe, Vliese und Papiere mit den Klebstoffen kombinierbar. Des Weiteren umfasst der Ausdruck "Klebeband" auch so genannte "Transferklebebänder", das heißt ein Klebeband ohne Träger. Bei einem Transferklebeband ist der Klebstoff vielmehr vor der Applikation zwischen flexiblen Linern aufgebracht, die mit einer Trennschicht versehen sind und/oder antiadhäsive Eigenschaften aufweisen. Zur Applikation wird regelmäßig zunächst ein Liner entfernt, der Klebstoff appliziert und dann der zweite Liner entfernt. Der Klebstoff kann so direkt zur Verbindung zweier Oberflächen verwendet werden.

Es sind aber auch Klebebänder möglich, bei denen nicht mit zwei Linern sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Für bestimmte Anwendungen kann es gewünscht sein, dass eine Seite oder beide Seiten des Klebebandes nicht vollständig mit Klebstoff versehen ist bzw. sind, sondern teilweise klebstofffreie Bereiche vorgesehen sind, um z.B. Aussparungen in den zu beklebenden Oberflächen zu berücksichtigen.

Als Trägermaterial eines Klebebandes werden vorliegend bevorzugt Polymerfolien, Folienverbunde oder mit organischen und/oder anorganischen Schichten versehene Folien oder Folienverbunde eingesetzt, wobei Folien, insbesondere dimensionsstabile Kunststoff- oder Metallfolien, bevorzugt werden. Derartige Folien/Folienverbunde können aus allen gängigen zur Folienherstellung verwendeten Kunststoffen bestehen, beispielhaft aber nicht einschränkend erwähnt seien:

Polyethylen, Polypropylen - insbesondere das durch mono- oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Polyesterfolien weisen den Vorteil auf, dass sie für Temperaturstabilität sorgen und eine erhöhte mechanische Stabilität einbringen. Ganz besonders bevorzugt besteht daher eine Trägerschicht in einem erfindungsgemäßen Liner aus einer Polyesterfolie, beispielsweise aus biaxial verstrecktem Polyethylenterephthalat.

Bei doppelseitig (selbst)klebenden Klebebändern können als obere und untere Schicht erfindungsgemäße Klebstoffe gleicher oder verschiedener Art und/oder gleicher oder verschiedener Schichtdicke zur Anwendung kommen. Der Träger kann dabei auf einer oder beiden Seiten dem Stand der Technik entsprechend vorbehandelt sein, so dass beispielsweise eine Verbesserung der Klebstoffverankerung erzielt wird. Die Haftklebstoffschichten können optional mit Trennpapieren oder Trennfolien eingedeckt werden. Alternativ kann auch nur eine Klebstoffschicht mit einem doppelseitig trennenden Liner eingedeckt sein.

In einer Variante ist in dem doppelseitig (selbst)klebenden Klebeband ein erfindungsgemäßer Klebstoff vorgesehen sowie ein beliebiger weiterer, zum Beispiel ein solcher, der besonders gut auf einem Abdecksubstrat haftet oder eine besonders gute Repositionierbarkeit zeigt.

Die Dicke der Klebstoffschicht, die entweder als Transferklebeband oder auf einem flächigen Gebilde beschichtet vorliegt, beträgt bevorzugt zwischen 10 $\mu$m und 5000 $\mu$m, weiter bevorzugt zwischen 100 $\mu$m und 4000 $\mu$m und besonders bevorzugt zwischen etwa 200 $\mu$m und 3000 $\mu$m.

Für doppelseitige Klebebänder gilt für die Klebstoffe ebenfalls, dass die Dicke der einzelnen Haftklebstoffschicht(en) bevorzugt 10 $\mu$m und 5000 $\mu$m, weiter bevorzugt zwischen 100 $\mu$m und 4000 $\mu$m und besonders bevorzugt zwischen etwa 200 $\mu$m und 3000 $\mu$m liegt. Klebebänder, die ein- oder beidseitig mit Klebstoffen beschichtet sind, werden am Ende des Herstellungsprozesses zumeist zu einer Rolle in Form einer archimedischen Spirale oder kreuzgespult aufgewickelt. Um bei doppelseitig klebenden Klebebändern zu verhindern, dass die Klebstoffe miteinander in Kontakt kommen, oder um bei einseitig klebenden Klebebändern eine Verklebung der Klebstoffe auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebstoffen (Transferklebeband) und Klebebandabschnitten (zum Beispiel Etiketten) eingesetzt.

Der thermisch härtbare, schmelzbare, vorzugsweise haftklebrige Klebstoff der vorliegenden Erfindung wird bevorzugt als Schicht zur Herstellung eines thermisch härtbaren, vorzugsweise haftklebrigen Klebebandes oder Dichtungsbandes, sowie daraus hergestellter Formkörper oder Stanzlinge verwendet, wobei das thermisch härtbare, schmelzbare, vorzugsweise haftklebrige Klebeband oder Dichtungsband zusätzliche hafklebrige und/ oder nicht haftklebrige Schichten, Trägerfolien oder -filme, haftvermittelnde Schichten, Release-Schichten oder sonstige Funktionsschichten sowie auch mehrere thermisch härtbare oder auf andere Art härt- oder vernetzbare Klebebandschichten enthalten kann und mit einem Trennliner ausgerüstet sein kann, der ein- oder beidseitig siliconisiert sein kann.

Die Herstellung einer thermisch härtbaren, schmelzbaren, vorzugsweise haftklebrigen Klebebandschicht erfolgt vorzugsweise in einem lösemittelfreien, kontinuierlichen Compoundier- und Beschichtungsprozess. Die Zudosierung des gemahlenen Reaktionsproduktes aus Phthalsäureanhydrid und Diethylentriamin und der weiteren, optionalen, bekannten Formulierungsbestandteile wie zum Beispiel Füllstoffe, Ruß, Farbpigmente, Mikrokugeln, rheologische Additive, Weichmacher, Klebrigmacherharze, Bitumen, Alterungsschutzmittel, Lichtschutzmittel, UV-Absorber sowie sonstige Hilfs- und Zusatzstoffe erfolgt bevorzugt während des kontinuierlichen Compoundierprozesses in das kontinuierlich arbeitende Mischaggregat, insbesondere den Compoundierextruder.

Der erfindungsgemäße, thermisch härtbare, schmelzbare, vorzugsweise haftklebrige Klebstoff sowie daraus hergestellte Haftklebebänder zeigen eine hervorragende Kombination von Produkteigenschaften, die auch für den Fachmann derartig nicht vorherzusehen waren.

Der erfindungsgemäße Klebstoff beziehungsweise das daraus hergestellte Klebeband härten überraschenderweise bereits bei einer Temperatur von 110°C binnen ungefähr 15 bis 20 Minuten zu hoher Festigkeit aus. Bei 180°C beträgt die Aushärtezeit ungefähr 5 Minuten. Im Zugscherversuch in Anlehnung an DIN EN 1465 werden Zugscherfestigkeiten von ungefähr 10 bis 25 MPa erzielt, abhängig unter anderem von der Aushärtetemperatur, der Aushärtezeit und von der genauen Formulierung des Klebstoffs. Die Haftung zu KTL-Blechen ist sehr gut; es werden stets kohäsive Bruchbilder erhalten. Die Haftung zu geölten Blechen kann mit den optionalen Formulierungsbestandteilen so eingestellt werden, dass sie ebenfalls sehr gut ist, so dass auch hier kohäsive Bruchbilder erhalten werden. Aufgrund der Verwendung von epoxidfunktionalisierten Acrylnitril/Butadien-Copolymeren kommt es erwartungsgemäß nicht zum Sprödbruch, das heißt nicht zum Abplatzen des Klebstoffs beziehungsweise des daraus hergestellten Klebebandes vom Substrat. Der erfindungsgemäße Klebstoff beziehungsweise das daraus hergestellte Klebeband sind überraschenderweise außergewöhnlich lagerstabil. Bei einer Lagertemperatur von 60 °C sind der Klebstoff bzw. das daraus hergestellte Klebeband ungefähr einen Monat stabil, das heißt ohne Einschränkungen verwendbar. Bei einer Lagertemperatur von 23 °C ist eine Lagerstabiltät von mehr als einem Jahr gegeben.

Die oben genannten Substrate, auf denen der Klebstoff beziehungsweise das daraus hergestellte Klebeband appliziert wird, können typischerweise geölte Stahlbleche sein, wie sie in der Automobilindustrie im Rohbau verwendet werden. Diese können verzinkt oder nicht verzinkt sein. Auch andere Metallsorten, wie zum Beispiel Aluminium, kommen in Frage. Es können aber auch lackierte oder vorbeschichtete Bleche, beispielsweise kataphoretisch tauchlackierte Bleche (KTL-Bleche) sein, wie sie in den Lackierstraßen der Automobilindustrie vorliegen.

Aufgrund der niedrigen Aushärtetemperatur können mit diesem Klebstoff beziehungsweise mit dem daraus hergestellten Klebeband auch viele Kunststoffe verklebt werden.

Geeignete Kunststoffsubstrate sind beispielsweise Acrylnitril-Butadien-Styrol-Copolymere (ABS), Polycarbonate (PC), ABS/PC-Blends, PMMA, Polyamide, Glasfaserverstärkte Polyamide, Polyvinylchlorid, Styrol Acrylnitril Copolymere, Polyacrylate bzw. Polymethacrylate, Polyoxymethylen, Acrylester-Styrol-Acrylnitril Copolymere, Polystyrol, und/oder Polyester, wie z.B. Polybutylenterephthalate (PBT) und/oder Polyethylenterephthalat (PET). Die Substrate können lackiert, bedruckt, bedampft oder besputtert sein.

Der erfindungsgemäße Klebstoff beziehungsweise das daraus hergestellte Klebeband können mit den optionalen Formulierungsbestandteilen so eingestellt werden, dass sie sowohl zum Kleben als auch zum Abdichten verwendet werden können, zum Beispiel zur Bördelfalzklebung, zur Bördelfalzabdichtung, zur Nahtabdichtung, zur Unterfütterungsklebung, zum Lochverschluss und vieles mehr.

Der erfindungsgemäße Klebstoff beziehungsweise das daraus hergestellte Klebeband sind haftklebrig. Mit den optionalen Formulierungsbestandteilen kann die Haftklebrigkeit verstärkt oder abgeschwächt werden. Dies kann beispielsweise über den Anteil an Füllstoffen oder Klebrigmacherharzen erfolgen, um nur zwei Möglichkeiten zu nennen.

Eine Klebebandschicht aus dem erfindungsgemäßen, thermisch härtbaren, schmelzbaren, vorzugsweise haftklebrigen Klebstoff kann in einem lösemittelfreien, kontinuierlichen oder auch diskontinuierlichen Compoundier- und Extrusionsprozess hergestellt werden, ohne dass es zur Aushärtung in einem solchen Hotmelt-Herstellprozess kommt. Die Prozesstemperaturen bewegen sich dabei zwischen 40 °C und 60 °C, je nach Viskosität des erfindungsgemäßen Klebstoffes. Durch die Möglichkeit, die Klebebandschicht aus dem erfindungsgemäßen Klebstoff in einem Hotmeltprozess herzustellen, können vorteilhafterweise sehr dicke Schichten hergestellt werden, beispielsweise mehrere Millimeter dicke, ohne dass es dabei zu einer störenden Blasenbildung kommt.. Da der erfindungsgemäße Klebstoff vor der Aushärtung kurzfristig einen hochviskos flüssigen Zustand durchläuft, können spaltüberbrückende Eigenschaften (Gap-Filling-Eigenschaften) erreicht werden.

Bei Raumtemperatur bis hin zu ungefähr 30 °C ist der erfindungsgemäße Klebstoff genügend fest beziehungsweise hochviskos, so dass er als auf einen Trennliner oder als auf ein Trägermaterial beschichteter Film zu einer Rolle aufgewickelt werden kann, ohne dass er an der Seite herausfließt beziehungsweise durch den Wickeldruck herausgequetscht wird.

Der Klebstoff bzw. das daraus hergestellte Klebeband erweisen sich als sehr lagerstabil. Sie müssen nicht gekühlt gelagert werden, was einen großen Vorteil darstellt. Die Lagerstabilität erstreckt sich bei Raumtemperatur auf einen Zeitraum von mehr als einem Jahr. Selbst bei 60 °C ist eine Lagerstabilität von ungefähr einen Monat gegeben. Die Lagerstabilität wird bestimmt, indem der Klebstoff bzw. das daraus hergestellte Klebeband nach der angegebenen Lagerzeit und Lagertemperatur nochmals verklebt werden und die gemessene Zugscherfestigkeit mit der Zugscherfestigkeit im Frischzustand verglichen wird. Es wurden keine signifikanten Unetrschiede festgestellt.

Anhand der folgenden Beispiele soll die Erfindung näher beschrieben werden, ohne die Erfindung damit einschränken zu wollen.

Prüfmethoden

Die folgenden Prüfmethode wurden eingesetzt, um die erfindungsgemäß hergestellten Muster kurz zu charakterisieren:

Dynamischer Schertest (Zugscherfestigkeit)

Der dynamische Schertest erfolgte in Anlehnung an DIN EN 1465. Er erfolgte stets nach der thermischen Härtung der verklebten Proben. Dazu wurden aus einer Klebebandschicht aus dem erfindungsgemäßen Klebstoff, die beidseitig jeweils mit einem Trennpapier abgedeckt war, rechteckige Stanzlinge mit den Maßen 25,0 mm x 12,5 mm ausgestanzt. Die Trennpapiere wurden daraufhin jeweils von einer Seite eines Stanzlings abgezogen. Die Dicke der Stanzlinge betrug stets zwischen 0,4 und 0,6 mm (0,5 $\pm$ 0,1 mm).

Die Stanzlinge wurden passgenau jeweils auf das Ende eines Prüfkörpers (Substrates) mit den Maßen 100,0 mm x 25,0 mm x 2,0 mm aufgelegt. Die Stanzlinge hafteten nun jeweils auf diesem Prüfkörper. Verwendet wurden Prüfkörper aus kataphoretisch tauchlackiertem Stahl (KTL-Stahl), Stahl, elektrolytisch verzinktem Stahl und feuerverzinktem Stahl. Die Bezeichnungen der Prüfkörper lauteten:

Kataphoretisch tauchlackierter Stahl (KTL-Stahl): Stahlprüfkörper aus DC04, nach Zuschnitt beschichtet mit Daimler OEM KTL Kathoguard 800
Stahl: DC04
Elektrolytisch verzinkter Stahl: DC01ZE 25/25
Feuerverzinkter Stahl: DX51 D+Z275
Lieferant aller genannten Prüfkörper war die Firma Rocholl GmbH.

Die nicht lackierten Prüfkörper wurden vor dem Auflegen der Stanzlinge zum Teil beölt (siehe Ergebnistabellen). Das Öl hatte die Bezeichnung Anticorit RP 4107 S (Firma Fuchs) und wurde in einer Stärke von 2 bis 3 g/m$^2$ aufgetragen. Anschließend wurde das noch auf den Stanzlingen verbliebene Trennpapier abgezogen.

Darauf wurden Prüfkörper aus dem jeweils gleichen Material jeweils bündig mit einem Ende so gelegt, dass wie in DIN EN 1465 beschrieben, jeweils ein überlappender Verbund resultierte. Die Überlappungslänge betrug jeweils 12,5 mm. Die Überlappungsfläche betrug jeweils 312,5 mm$^2$. Die überlappenden Verbunde wurden auf ein Blech gelegt, wobei durch Unterlegscheiben dafür Sorge getragen wurde, dass der obere Prüfkörper nicht kippen konnte. Auf den oberen Prüfkörper wurde im Bereich der Überlappungsfläche jeweils ein Gewicht von 2 kg gestellt. Der Verbund wurde dem Druck des Gewichtes 10 Sekunden jeweils bei Raumtemperatur ausgesetzt (Verpresszeit). Sodann wurde das Gewicht entfernt. Der Verbund wurde anschließend 5 bis 30 Minuten einer Temperatur zwischen 110 °C bis 230 °C ausgesetzt. Dabei kam es zu einer Härtungsreaktion innerhalb der Klebebandschicht-Proben und zu einer sich aufbauenden starken Haftung zwischen den jeweiligen Klebebandschicht-Proben und den jeweiligen Prüfkörpern. Es kam somit zu einer Verklebung mit einer erheblichen Festigkeitszunahme. Nach Abkühlung und einer Wartezeit von zwei bis drei Stunden erfolgte die Bestimmung der Zugscherfestigkeit.

Die Bestimmung der Zugscherfestigkeit von Überlappungsverklebungen ermöglicht Aussagen über die Scherbelastbarkeit eines doppelseitig klebenden Klebeprodukts. Die Bestimmung erfolgte gemäß DIN EN 1465 mittels einer Zugprüfmaschine. Die Prüfgeschwindigkeit betrug 10 mm/min. Alle Messungen wurden in einem klimatisierten Raum bei 23 °C und 50 % relativer Luftfeuchte durchgeführt.

Experimenteller Teil

Herstellung des erfindungsgemäßen Klebstoffs und der erfindungsgemäßen Klebebandschicht

Der erfindungsgemäße Klebstoff wurde in Laboransätzen in einem beheiz- und evakuierbaren 1 Liter-Planetenmischer der Firma PC-Laborsystem gefertigt. Dazu wurde zunächst das epoxidfunktionalisierte Acrylnitril/Butadien-Copolymer auf 60 °C vorerwärmt und dann zusammen mit dem gemahlenen Reaktionsprodukt aus Phthalsäureanhydrid und Diethylentriamin und gegebenenfalls den weiteren, optionalen Formulierungsbestandteilen in die Mischdose eingewogen und anschließend bei einer Temperatur von 40 °C bis 60 °C zwei Stunden lang gemischt. In der zweiten Stunde wurde Vakuum angelegt, um die Mischung von Restfeuchtigkeit zu befreien. Danach wurde aus der Mischung jeweils ein Film in der gewünschten Dicke durch Verpressen der Mischung zwischen zwei mit silikonisierten Polyester-Folien abgedeckten Stahlplatten bei 60 °C hergestellt. Nach der so erfolgten Ausformung wurde der Film auf Raumtemperatur abgekühlt, wodurch er sich verfestigte. Der so hergestellte Film ist die erfindungsgemäße Klebebandschicht.

Einige der erfindungsgemäßen Klebstoffe wurden in alternativer Weise in einem Compoundierextruder gefertigt.

Dazu wurde das epoxidfunktionalisierte Acrylnitril/Butadien-Copolymer mit Hilfe einer Fassschmelzepumpe bei 60 °C in einen Doppelschneckenextruder der Firma Krauss Maffei Berstorff, Bezeichnung Extruder ZE30Rx54D UTXmi, gepumpt. Der Extruder wurde von außen auf ca. 40 °C bis 60 °C elektrisch beheizt und über verschiedene Gebläse luftgekühlt. Er war so konzipiert, dass eine gute Durchmischung von dem epoxidfunktionalisierten Acrylnitril/Butadien-Copolymer und den weiteren Stoffen, wie insbesondere dem gemahlenen Reaktionsprodukt aus Phthalsäureanhydrid und Diethylentriamin, den Füllstoffen, sowie den weiteren Hilfs- und Zusatzstoffen bei kurzer Verweilzeit im Extruder gewährleistet war. Dazu wurden die Mischwellen des Doppelschneckenextruders so angeordnet, dass sich fördernde und mischende Elemente abwechselten. Die Zugabe der weiteren Stoffe erfolgte mit geeignetem Dosierequipment unter Verwendung von Dosierhilfsmitteln in die druckfreien Förderzonen des Doppelschneckenextruders. Alternativ zum Doppelschneckenextruder können vorteilhaft auch ein Planetwalzenextruder oder ein Ringextruder verwendet werden, da hiermit die Compoundiertemperaturen leichter unter 60 °C gehalten werden können. Vorteilhafte Extruder ermöglichen zudem die Entgasung des Compounds.

Nach Austritt der ca. 60 °C heißen Mischung aus dem Doppelschneckenextruder (Austritt: Runddüse 5 mm Durchmesser) erfolgte die Ausformung zum Film direkt mittels eines nachgeschalteten Zweiwalzenauftragswerks zwischen zwei zulaufenden, beidseitig silikonisierten, 50 $\mu$m dicken Polyesterfolien. Die Zulaufgeschwindigkeit wurde zwischen 1 m/min und 20 m/min variiert. Eine der zulaufenden, beidseitig silikonisierten Polyesterfolien wurde nach Abkühlung des Films und damit Verfestigung sofort wieder ausgedeckt. Der vorliegende Film wurde anschließend auf einen zylindrischen Kern aufgewickelt. Dieser Film ist die erfindungsgemäße Klebebandschicht.

In Tabelle 1 sind die zur Herstellung des erfindungsgemäßen Klebstoffs und der erfindungsgemäßen Klebebandschicht verwendeten Basismaterialien (Rohstoffe) aufgeführt, und zwar jeweils mit Handelsnamen, Hersteller und den für diese Erfindung relevanten technischen Daten.

Tabelle 1: Zur Herstellung des erfindungsgemäßen Klebstoffs verwendete Basismaterialien (Rohstoffe)

| Handelsname | Beschreibung | Epoxid-Äquivaentgewicht (g/ Eq) | NH-Äquivalentgewicht (g/ Eq) | Hersteller / Lieferant |
|---|---|---|---|---|
| Struktol ® Polydis 3610 | Mit Bisphenol-A-diglycidylether-Harz epoxidterminiertes, kettenverlängertes Acrylnitril/Butadien-Copolymer (CTBN-Basis) * | 600 | | Schill+ Seilacher |
| Struktol ® Polydis 3611 | Mit Bisphenol-F-diglycidylether-Harz epoxidterminiertes, kettenverlängertes Acrylnitril/Butadien-Copolymer (CTBN-Basis) * | 550 | | Schill+ Seilacher |
| Aradur ® 9506 | Gemahlenes Umsetzungsprodukt aus Phthalsäureanhydrid und Diethylentriamin, CAS-Nummer: 68003-28-1 | | 77,7 | Huntsman |
| Talkum Pharma M® | Talkum, CAS-Nr.: 14807-96-6, spez. Oberfläche: 4,6 m$^2$/g | | | Scheruhn GmbH |
| Omyacarb ® 5-GU | Gemahlene Kreide, mittlerer Teilchendurchmesser: 5,5 $\mu$m | | | Omya |
| * CTBN = Carboxyl-terminierte Copolymere aus Acrylnitril und Butadien | | | | |

**Beispiele**

**Beispiel 1**

Der erfindungsgemäße Klebstoff setzt sich wie folgt zusammen:
Zusammensetzung Beispiel 1:

| Rohstoff | Gewichtsanteil [Gew.-%] | Anzahl der eingebrachten Epoxid- beziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3610 | 91,4 | 152,3 mmol Epoxid | 1,00 |
| Aradur ® 9506 | 8,6 | 110,7 mmol NH | 0,73 |
| Summe | 100,00 | | |

Die Herstellung erfolgte im Laboransatz (1 Liter) und im Extrusionsverfahren.

Ergebnisse:

Zugscherfestigkeiten [MPa]:

| | Substrat | KTL | | |
|---|---|---|---|---|
| | Aushärtetemperatur | 110 °C | 130 °C | 160 °C |
| Aushärtezeit | 5 Minuten | 2,1 (A) | 5,9 (A) | 17,9 (MB) |
| | 15 Minuten | 10,7 (MB) | 16,3 (MB) | 20,8 (K) |
| | 30 Minuten | 13,4 (K) | 20,2 (K) | 22,6 (K) |

Bruchbilder: A= Adhäsiv, MB= Mischbruch, K= Kohäsiv (kein Sprödbruch)

Die Lagerstabilität betrug länger als einen Monat bei 60 °C und länger als ein Jahr bei 23 °C. Der Klebstoff ist vor der Aushärtung haftklebrig.

Beispiel 2

Der erfindungsgemäße Klebstoff setzt sich wie folgt zusammen:
Zusammensetzung Beispiel 2:

| Rohstoff | Gewichtsanteil [Gew.-%] | Anzahl der eingebrachten Epoxid- beziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3610 | 95,5 | 159,2 mmol Epoxid | 1,00 |
| Aradur ® 9506 | 4,5 | 57,9 mmol NH | 0,36 |
| Summe | 100,00 | | |

Die Herstellung erfolgte im Laboransatz (1Liter) und im Extrusionsverfahren.

Ergebnisse:

Zugscherfestigkeiten [MPa]:

| | Substrat | KTL | | |
|---|---|---|---|---|
| | Aushärtetemperatur | 110 °C | 130 °C | 160 °C |
| Aushärtezeit | 5 Minuten | 1,2 (A) | 3,6 (A) | 10,5 (MB) |
| | 15 Minuten | 3,1 (MB) | 6,0 (K) | 12,2 (K) |
| | 30 Minuten | 5,0 (MB) | 8,9 (K) | 13,6 (K) |

Bruchbilder: A= Adhäsiv, MB= Mischbruch, K= Kohäsiv (kein Sprödbruch)

Die Lagerstabilität betrug länger als einen Monat bei 60 °C und länger als ein Jahr bei 23 °C. Der Klebstoff ist vor der Aushärtung haftklebrig.

Beispiel 3

Der erfindungsgemäße Klebstoff setzt sich wie folgt zusammen:
Zusammensetzung Beispiel 3:

| Rohstoff | Gewichtsanteil [Gew.-%] | Anzahl der eingebrachten Epoxid- beziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3610 | 73,1 | 121,8 mmol Epoxid | 1,00 |
| Aradur ® 9506 | 6,9 | 88,8 mmol NH | 0,73 |
| Talkum Pharma M® | 20,0 | | |
| Summe | 100,00 | | |

Die Herstellung erfolgte im Laboransatz (1Liter) und im Extrusionsverfahren.

Ergebnisse:

Zugscherfestigkeiten [MPa]:

| Substrat | KTL | | |
|---|---|---|---|
| Aushärtetemperatur | 110 °C | 130 °C | 160 °C |
| Aushärtezeit 5 Minuten | 1,9 (A) | 4,5 (MB) | 10,2 (K) |
| 15 Minuten | 6,4 (K) | 8,9 (K) | 11,0 (K) |
| 30 Minuten | 8,7 (K) | 11,4 (K) | 12,2 (K) |

| Aushärtetemperatur/ Aushärtezeit | 180 °C/30 Minuten | | | | | |
|---|---|---|---|---|---|---|
| Substrat | Stahl | Stahl geölt | Elektrolytisch verzinkter Stahl | Elektrolytisch verzinkter Stahl, geölt | Feuerverzinkter Stahl | Feuerverzinkter Stahl, geölt |
| Zugscherfestigkeit [MPa] | 11,6 (K) | 12,9 (K) | 14,7 (K) | 10,6 (MB) | 15,3 (K) | 12,3 (MB) |

Bruchbilder: A= Adhäsiv, MB= Mischbruch, K= Kohäsiv (kein Sprödbruch)

Die Lagerstabilität betrug länger als einen Monat bei 60 °C und länger als ein Jahr bei 23 °C. Der Klebstoff ist vor der Aushärtung haftklebrig.

**Beispiel 4**

Der erfindungsgemäße Klebstoff setzt sich wie folgt zusammen:
Zusammensetzung Beispiel 4:

| Rohstoff | Gewichtsanteil [Gew.-%] | Anzahl der eingebrachten Epoxid- beziehungsweise NH-Gruppen, bezogen auf den prozentualen Gewichtsanteil | Verhältnis der Anzahl der der Epoxidgruppen zur Anzahl der NH- Gruppen, normiert auf 1,00 mmol Epoxidgruppen |
|---|---|---|---|
| Struktol ® Polydis 3610 | 54,9 | 91,5 mmol Epoxid | 1,00 |
| Aradur ® 9506 | 5,1 | 65,6 mmol NH | 0,72 |
| Talkum Pharma M® | 20,0 | | |
| Omyacarb® 5-GU | 20,0 | | |
| Summe | 100,00 | | |

Die Herstellung erfolgte im Laboransatz (1 Liter).

Ergebnisse:

Zugscherfestigkeiten [MPa]:

| Substrat | | KTL | | |
|---|---|---|---|---|
| Aushärtetemperatur | | 110 °C | 130 °C | 160 °C |
| Aushärtezeit | 5 Minuten | 1,3 (A) | 3,5 (A) | 8,1 (MB) |
| | 15 Minuten | 5,9 (K) | 7,0 (MB) | 11,9 (K) |
| | 30 Minuten | 8,2 (K) | 10,7 (K) | 13,8 (K) |

| Aushärtetemperatur/ Aushärtezeit | 180 °C / 30 Minuten | | | | | |
|---|---|---|---|---|---|---|
| Substrat | Stahl | Stahl geölt | Elektrolytisch verzinkter Stahl | Elektrolytisch verzinkter Stahl, geölt | Feuerverzinkter Stahl | Feuerverzinkter Stahl, geölt |
| Zugscherfestigkeit [MPa] | 13,0 (K) | 9,5 (A) | 13,1 (MB) | 7,7 (A) | 13,5 (K) | 8,5 (MB) |

Bruchbilder: A= Adhäsiv, MB= Mischbruch, K= Kohäsiv (kein Sprödbruch)

Die Lagerstabilität betrug länger als einen Monat bei 60 °C und länger als ein Jahr bei 23 °C. Der Klebstoff ist vor der Aushärtung haftklebrig.

Beispiel 5

Der erfindungsgemäße Klebstoff setzt sich wie folgt zusammen:
Zusammensetzung Beispiel 5:

| Rohstoff | Gewichtsanteil [Gew.-%] | Anzahl der eingebrachten Epoxid- beziehungsweise NH-Gruppen, bezogen auf den prozentualen Gewichtsanteil | Verhältnis der Anzahl der der Epoxidgruppen zur Anzahl der NH-Gruppen, normiert auf 1,00 mmol Epoxidgruppen |
|---|---|---|---|
| Struktol ® Polydis 3611 | 90,7 | 164,9 mmol Epoxid | 1,00 |
| Aradur ® 9506 | 9,3 | 119,7 mmol NH | 0,73 |
| Summe | 100,00 | | |

Die Herstellung erfolgte im Laboransatz (1 Liter).

Ergebnisse:

Zugscherfestigkeiten [MPa]:

| | Substrat | KTL | | |
|---|---|---|---|---|
| | Aushärtetemperatur | 110 °C | 130 °C | 160 °C |
| **Aushärtezeit** | 5 Minuten | 1,9 (A) | 3,8 (A) | 15,2 (MB) |
| | 15 Minuten | 7,2 (MB) | 13,0 (K) | 16,9 (K) |
| | 30 Minuten | 9,4 (K) | 14,1 (K) | 17,4 (K) |

Bruchbilder: A= Adhäsiv, MB= Mischbruch, K= Kohäsiv (kein Sprödbruch)

Die Lagerstabilität betrug länger als einen Monat bei 60 °C und länger als ein Jahr bei 23 °C. Der Klebstoff ist vor der Aushärtung haftklebrig.

**Patentansprüche**

1. Klebstoff, umfassend ein epoxidfunktionalisiertes Acrylnitril/Butadien-Copolymer mit durchschnittlich mehr als 1,5 Epoxidgruppen pro Molekül und das gemahlene Reaktionsprodukt aus Phthalsäureanhydrid und Diethylentriamin.

2. Klebstoff nach Anspruch 1, **dadurch gekennzeichnet, dass**
er schmelzbar ist.

3. Klebstoff nach einem der vorangehenden Ansprüche, **dadurch gekennzeichnet, dass** er thermisch härtbar ist.

4. Klebstoff nach einem der vorangehenden Andsprüche, **dadurch gekennzeichnet, dass** er haftklebrig ist.

5. Klebstoff nach einem der vorangehenden Ansprüche, **dadurch gekennzeichnet, dass** das epoxidfunktionalisierte Acrylnitril/Butadien-Copolymer das chemische Umsetzungsprodukt eines carboxylterminierten Acrylnitril/Butadien-Copolymers

   - mit einem Bisphenol-A-diglycidylether oder einem Bisphenol-F-diglycidylether oder Epichlorhydrin und/oder
   - mit einem durch chemische Umsetzung mit Bisphenol A oder Bisphenol F kettenverlängerten Bisphenol-A-diglycidylether oder Bisphenol-F-diglycidylether ist.

6. Klebstoff nach einem der vorangehenden Ansprüche, **dadurch gekennzeichnet, dass** das gemahlene Reaktionsprodukt aus Phthalsäureanhydrid und Diethylentriamin

   - einen freien Diethylentriamin-Gehalt von zwischen einschließlich 1,0 und 5,0 Gewichtsprozent und/oder
   zu mindestens 95 Gewichtsprozent eine Korngröße von kleiner oder gleich 70 $\mu$m (Laser-Lichtstreuung; ISO 13320:2009)
   hat.

7. Thermisch härtbarer Klebstoff nach einem der vorangehenden Ansprüche, **dadurch gekennzeichnet, dass** das Verhältnis der Anzahl der NH-Bindungen des gemahlenen Reaktionsprodukts aus Phthalsäureanhydrid und Diethylentriamin zur Gesamtanzahl der Epoxidgruppen zwischen einschließlich 0,1 und 1,5, bevorzugt zwischen einschließlich 0,3 und 1,2, besonders bevorzugt zwischen 0,5 und 0,9 beträgt, wobei zur Berechnung für das Reaktionsprodukt aus Phthalsäureanhydrid und Diethylentriamin von einem theoretischen Äquivalentgewicht von 77,7 g pro Mol NH-Bindungen ausgegangen wird.

8. Thermisch härtbarer Klebstoff nach einem der vorangehenden Ansprüche, **dadurch gekennzeichnet, dass**

das gemahlene Reaktionsprodukt aus Phthalsäureanhydrid und Diethylentriamin stoffmengenmäßig gegenüber Dicyandiamid der hauptanteilige latente Härter des Klebstoffes ist, bevorzugt einen Stoffmengenanteil von mindestens 90 % gegenüber Dicyandiamid, besonders bevorzugt einen Stoffmengenanteil von 100% hat.

9. Thermisch härtbarer Klebstoff nach einem der vorangehenden Ansprüche, **dadurch gekennzeichnet, dass** das epoxidfunktionalisierte Acrylnitril/Butadien-Copolymer mit durchschnittlich mehr als 1,5 Epoxidgruppen pro Molekül stoffmengenmäßig gegenüber Bisphenol-A-diglycidylether oder Bisphenol-F-diglycidylether oder einem mit Bisphenol A oder Bisphenol F kettenverlängertem Diglycidylether der hauptanteilige Epoxidgruppen tragende Stoff des Klebstoffes ist, bevorzugt einen Stoffmengenanteil von mindestens 90 % gegenüber Bisphenol-A-diglycidylether oder Bisphenol-F-diglycidylether oder einem mit Bisphenol A oder Bisphenol F kettenverlängertem Diglycidylether, besonders bevorzugt einen Stoffmengenanteil von 100% hat.

10. Thermisch härtbarer Klebstoff nach einem der vorangehenden Ansprüche, **dadurch gekennzeichnet, dass** in dem Klebstoff keine chemisch blockierte, aminreaktive Reaktionskomponente enthalten ist.

11. Thermisch härtbarer Klebstoff nach einem der vorangehenden Ansprüche, **dadurch gekennzeichnet, dass** der Klebstoff weitere, optionale, bekannte Formulierungsbestandteile, wie zum Beispiel Füllstoffe, Ruß, Farbpigmente, Mikrokugeln, rheologische Additive, Weichmacher, Klebrigmacherharze, Bitumen, Alterungsschutzmittel, Lichtschutzmittel, UV-Absorber sowie sonstige Hilfs- und Zusatzstoffe enthält.

12. Verfahren zur Herstellung eines thermisch härtbaren Klebstoffes gemäß einem der vorangehenden Ansprüche, umfassend das Mischen der Stoffe, **dadurch gekennzeichnet, dass**

während des Mischprozesses die Temperatur der Mischung 60 °C zu keiner Zeit überschreitet und
dass das Mischen zumindest gegen Ende des Mischprozesses unter Vakuum erfolgt.

13. Klebeband enthaltend mindestens eine Schicht eines thermisch härtbaren Klebstoff nach einem der Ansprüche 1 bis 11 oder erhältlich nach Anspruch 12.

14. Klebeband nach Anspruch 13, enthaltend zumindest eine Schicht eines Trägermaterials, insbesondere eine Schicht aus Gewebe, Vlies, Papier oder Folie.

15. Verfahren zur Herstellung eines Klebebands gemäß einem der Ansprüche 13 oder 14, **dadurch gekennzeichnet, dass** die Herstellung in einem lösemittelfreien, kontinuierlichen Compoundier- und Beschichtungsprozess erfolgt, insbesondere durch Zudosierung des gemahlenen Reaktionsproduktes aus Phthalsäureanhydrid und Diethylentriamin, der Füllstoffe, Ruß, Farbpigmente, Mikrokugeln, rheologische Additive, Weichmacher, Klebrigmacherharze, Bitumen, Alterungsschutzmittel, Lichtschutzmittel, UV-Absorber sowie der sonstigen Hilfs- und Zusatzstoffe während des kontinuierlichen Compoundierprozesses in das kontinuierlich arbeitende Mischaggregat, insbesondere den Compoundierextruder erfolgt.

## Claims

1. Adhesive comprising an epoxide-functionalized acrylonitrile/butadiene copolymer having on average more than 1.5 epoxide groups per molecule, and the ground reaction product of phthalic anhydride and diethylenetriamine.

2. Adhesive according to Claim 1, **characterized in that** it is meltable.

3. Adhesive according to either of the preceding claims, **characterized in that** it is thermally curable.

4. Adhesive according to any of the preceding claims, **characterized in that** it is pressure-sensitively adhesive.

5. Adhesive according to any of the preceding claims, **characterized in that** the epoxide-functionalized acrylonitrile/butadiene copolymer is the product of chemical reaction of a carboxyl-terminated acrylonitrile/butadiene copolymer

- with a bisphenol A diglycidyl ether or a bisphenol F diglycidyl ether or epichlorohydrin

and/or

- with a bisphenol A diglycidyl ether or bisphenol F diglycidyl ether chain-extended by chemical reaction with bisphenol A or bisphenol F.

6. Adhesive according to any of the preceding claims, **characterized in that**

the ground reaction product of phthalic anhydride and diethylenetriamine

- has a free diethylenetriamine content between 1.0 and 5.0 weight percent inclusive

and/or
to an extent of at least 95 weight percent has a particle size of less than or equal to 70 $\mu$m (laser light scattering; ISO 13320:2009).

7. Thermally curable adhesive according to any of the preceding claims, **characterized in that** the ratio of the number of NH bonds in the ground reaction product of phthalic anhydride and diethylenetriamine to the total number of epoxide groups is between 0.1 and 1.5 inclusive, preferably between 0.3 and 1.2 inclusive, more preferably between 0.5 and 0.9, the basis for the calculation for the reaction product of phthalic anhydride and diethylenetriamine being a theoretical equivalent weight of 77.7 g per mol of NH bonds.

8. Thermally curable adhesive according to any of the preceding claims, **characterized in that** the ground reaction product of phthalic anhydride and diethylenetriamine in terms of amount of substance relative to dicyandiamide is the preponderant latent curing agent of the adhesive, preferably having an amount-of-substance fraction of at least 90% relative to dicyandiamide, more preferably an amount-of-substance fraction of 100%.

9. Thermally curable adhesive according to any of the preceding claims, **characterized in that** the epoxide-functionalized acrylonitrile/butadiene copolymer having on average more than 1.5 epoxide groups per molecule in terms of amount of substance relative to bisphenol A diglycidyl ether or bisphenol F diglycidyl ether or a diglycidyl ether chain-extended with bisphenol A or bisphenol F is the preponderant epoxide-group-carrying substance of the adhesive, preferably having an amount-of-substance fraction of at least 90% relative to bisphenol A diglycidyl ether or bisphenol F diglycidyl ether or a diglycidyl ether chain-extended with bisphenol A or bisphenol F, more preferably an amount-of-substance fraction of 100%.

10. Thermally curable adhesive according to any of the preceding claims, **characterized in that** there is no chemically blocked, amine-reactive reaction component in the adhesive.

11. Thermally curable adhesive according to any of the preceding claims, **characterized in that** the adhesive comprises further, optional, known formulating constituents, such as, for example, fillers, carbon black, colour pigments, microspheres, rheological additives, plasticizers, tackifier resins, bitumen, ageing inhibitors, light stabilizers, UV absorbers, and also other auxiliaries and adjuvants.

12. Method for producing a thermally curable adhesive according to any of the preceding claims, comprising the mixing of the substances, **characterized in that** during the mixing process the temperature of the mixture at no time exceeds 60°C and
**in that** the mixing, at least towards the end of the mixing process, takes place under reduced pressure.

13. Adhesive tape comprising at least one layer of a thermally curable adhesive according to any of Claims 1 to 11 or obtainable according to Claim 12.

14. Adhesive tape according to Claim 13, comprising at least one layer of a carrier material, more particularly a layer of woven fabric, nonwoven, paper or film.

15. Method for producing an adhesive tape according to either of Claims 13 and 14, **characterized in that** production takes place in a solvent-free, continuous compounding and coating process, more particularly by metered addition of the ground reaction product of phthalic anhydride and diethylenetriamine, of the fillers, carbon black, colour pigments, microspheres, rheological additives, plasticizers, tackifier resins, bitumen, ageing inhibitors, light stabilizers, UV absorbers, and also the other auxiliaries and adjuvants into the continuously operating mixing assembly, more particularly the compounding extruder, during the continuous compounding process.

**Revendications**

1. Adhésif, comprenant un copolymère d'acrylonitrile/butadiène, fonctionnalisé par époxyde comportant en moyenne plus de 1,5 groupes époxyde par molécule et le produit de réaction broyé d'anhydride d'acide phtalique et de diéthylènetriamine.

2. Adhésif selon la revendication 1, **caractérisé en ce qu'**il est fusible.

3. Adhésif selon l'une quelconque des revendications précédentes, **caractérisé en ce qu'**il est durcissable thermiquement.

4. Adhésif selon l'une quelconque des revendications précédentes, **caractérisé en ce qu'**il est autoadhésif.

5. Adhésif selon l'une quelconque des revendications précédentes, **caractérisé en ce que** le copolymère d'acrylonitrile/butadiène, fonctionnalisé par époxyde est le produit de transformation chimique d'un copolymère d'acrylonitrile/butadiène terminé par carboxyle

   - avec un éther de diglycidyle de bisphénol A ou un éther de diglycidyle de bisphénol F ou l'épichlorhydrine et/ou
   - avec un éther de diglycidyle de bisphénol A ou un éther de diglycidyle de bisphénol F à chaîne allongée par transformation chimique avec du bisphénol A ou du bisphénol F.

6. Adhésif selon l'une quelconque des revendications précédentes, **caractérisé en ce que** le produit de réaction broyé d'anhydride d'acide phtalique et de diéthylènetriamine

   - possède une teneur en diéthylènetriamine libre comprise entre 1,0 et 5,0 pour cent en poids inclus et/ou possède, à raison d'au moins 95 pour cent en poids, une granulométrie supérieure ou égale à 70 $\mu$m (diffusion de lumière laser ; norme ISO 13320:2009).

7. Adhésif durcissable thermiquement selon l'une quelconque des revendications précédentes, **caractérisé en ce que** le rapport du nombre de liaisons NH du produit de réaction broyé d'anhydride d'acide phtalique et de diéthylènetriamine sur le nombre total de groupes époxyde est compris entre 0,1 et 1,5 inclus, préférablement entre 0,3 et 1,2 inclus, particulièrement préférablement entre 0,5 et 0,9, dans lequel, pour le calcul pour le produit de réaction d'anhydride d'acide phtalique et de diéthylènetriamine, on se base sur un poids équivalent théorique de 77,7 g par mole de liaisons NH.

8. Adhésif durcissable thermiquement selon l'une quelconque des revendications précédentes, **caractérisé en ce que** le produit de réaction broyé d'anhydride d'acide phtalique et de diéthylènetriamine, en termes de quantité de substance par rapport au dicyandiamide, est l'agent de durcissement latent prépondérant de l'adhésif, préférablement possédant une fraction de quantité de substance d'au moins 90 % par rapport au dicyandiamide, plus préférablement une fraction de quantité de substance de 100 %.

9. Adhésif durcissable thermiquement selon l'une quelconque des revendications précédentes, **caractérisé en ce que** le copolymère d'acrylonitrile/butadiène fonctionnalisé par époxyde comportant en moyenne plus de 1,5 groupes époxyde par molécule est, en termes de quantité de substance par rapport à l'éther de diglycidyle de bisphénol A, ou un éther de diglycidyle de bisphénol F, ou l'éther de diglycidyle à chaîne allongée avec du bisphénol A ou du bisphénol F, la substance portant des groupes époxyde prépondérante de l'adhésif, possédant préférablement une fraction de quantité de substance d'au moins 90 % par rapport à l'éther de diglycidyle de bisphénol A, ou l'éther de diglycidyle de bisphénol F, ou l'éther de diglycidyle chaîne allongée avec du bisphénol A ou du bisphénol F, particulièrement préférablement une fraction de quantité de substance de 100 %.

10. Adhésif durcissable thermiquement selon l'une quelconque des revendications précédentes, **caractérisé en ce qu'**aucun composant de réaction réactif avec une amine, chimiquement bloqué n'est contenu dans l'adhésif.

**11.** Adhésif durcissable thermiquement selon l'une quelconque des revendications précédentes, **caractérisé en ce que** l'adhésif contient d'autres ingrédients de formulation connus, éventuels, comme par exemple des charges, de la suie, des pigments colorés, des microbilles, des additifs rhéologiques, des plastifiants, des résines conférant une adhérence, des bitumes, des agents de protection contre le vieillissement, des agents photoprotecteurs, des absorbants UV ainsi que d'autres substances auxiliaires et adjuvants.

**12.** Procédé pour la préparation d'un adhésif durcissable thermiquement selon l'une quelconque des revendications précédentes, comprenant le mélange des substances, **caractérisé en ce que** pendant le processus de mélange, la température du mélange ne dépasse à aucun moment 60 °C et
**en ce que** le mélangeage est réalisé sous vide au moins vers la fin du processus de mélange.

**13.** Ruban adhésif contenant au moins une couche d'un adhésif durcissable thermiquement selon l'une quelconque des revendications 1 à 11 ou pouvant être obtenu selon la revendication 12.

**14.** Ruban adhésif selon la revendication 13, contenant au moins une couche d'un matériau de support, en particulier une couche de tissu, de non-tissé, de papier ou de feuille.

**15.** Procédé pour la préparation d'un ruban adhésif selon l'une quelconque des revendications 13 ou 14, **caractérisé en ce que**
la préparation est réalisée dans un processus de compoundage et de revêtement sans solvant, en continu, en particulier par ajout du produit de réaction broyé d'anhydride d'acide phtalique et de diéthylènetriamine, des charges, de la suie, des pigments colorés, des microbilles, des additifs rhéologiques, des plastifiants, des résines conférant une adhérence, des bitumes, des agents de protection contre le vieillissement, des agents photoprotecteurs, des absorbants UV ainsi que des autres substances auxiliaires et adjuvants pendant le processus de compoundage en continu dans le dispositif mélangeur travaillant en continu, en particulier dans l'extrudeuse de compoundage.

**EP 3 760 686 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018059931 A1
- DE 102013217880 A1
- US 4459398 A
- EP 0289632 A1
- EP 1876194 A1
- EP 381625 B1
- EP 245018 B1
- DE 4001417 A1
- EP 1527147 B1
- EP 1578838 B1
- EP 1819793 B1
- EP 2084199 B1
- EP 2084203 B1
- EP 2161274 B1
- EP 2182025 B1
- EP 2730594 A1
- EP 2917254 B1
- EP 2986685 B1
- US 4661539 A
- US 10150897 B2
- US 20170081571 A1
- WO 2004067664 A
- WO 2014072426 A1
- WO 2014172128 A

**In der Beschreibung aufgeführte Nicht-Patentliteratur**

- *CHEMICAL ABSTRACTS,* 9011-11-4